# EUROPÄISCHE PATENTSCHRIFT

(11) **EP 0 458 995 B1**
(45) Veröffentlichungstag und Bekanntmachung des Hinweises auf die Patenterteilung: **29.07.1998**
(21) Anmeldenummer: 90110155.0
(22) Anmeldetag: 29.05.1990
(51) Int. Cl.: G01F 15/075

(54) **Messgerät zum Ermitteln, Verarbeiten und Anzeigen von Daten über Durchflussmengen von Flüssigkeiten, Gasen oder elektrischen Strömen**
Measuring device for detecting, processing and displaying of data concerning flow quantities of liquids, gasses or electrical currents
Dispositif de mesure pour la détection, le traitement et l'affichage de données concernant des débits de liquides, de gaz ou de courants électriques

(43) Veröffentlichungstag der Anmeldung: 04.12.1991
(73) Patentinhaber: SIEMENS AKTIENGESELLSCHAFT, 80333 München (DE)
(72) Erfinder: Baumgärtner, Manfred, Dr. Ing., D-8510 Fürth (DE); Gärtner, Franz-Georg, Dr. rer. nat., D-8500 Nürnberg (DE); Schön, Manfred, Dipl.-Ing. (FH), D-8504 Stein (DE)

(56) Entgegenhaltungen:
- EP-A- 293 639
- GB-A- 2 100 036
- US-A- 4 718 025
- OIL AND GAS JOURNAL. vol. 82, no. 46, November 1984, TULSA US Seiten 132 - 141; J.N. MINICH: "ELECTRONIC MEASUREMENT FOR CUSTODY TRANSFER"

## Beschreibung

Die Erfindung betrifft ein Meßgerät gemäß Oberbegriff des Anspruchs 1 (US-A-4 718 025).

Meßgeräte dieser Art erfüllen neben ihrer eigentlichen Aufgabe der Durchflußmengenmessung bestimmter Substanzen weitere Aufgaben, wie beispielsweise die Feststellung des Durchflußvolumens in Abhängigkeit von der Zeiteinheit, einer Arbeitsschicht oder eines Tages, des Durchflusses eines bestimmten, voreinstellbaren Volumens usw. Dazu besitzen solche Meßgeräte Signalgeber zur Steuerung von Ventilen, Schaltern, Alarmgebern und dergleichen. Diese erweiterten Funktionen werden üblicherweise von einem integrierten Mikrocomputer gesteuert. Ein solcher Mikrocomputer enthält einen Langzeit-Datenspeicher, in den die Gerätefunktionen in Form einer Liste eingespeichert sind. Jeder dieser Funktionen ist eine Kennziffer zugeordnet, die mit Hilfe einer Tastatur nacheinander in Vorwärts- oder Rückwärtsrichtung angewählt werden kann. Die zugeordnete Funktion wird dann auf einem Display angezeigt. Diese Einzelfunktionen betreffen nicht nur den gewünschten Betriebszustand des Gerätes, also beispielsweise "Durchfluß vorwärts", "Gesamtvolumen vorwärts", Tagesvolumen rückwärts", also Werte, die für die Bedienung des Gerätes Bedeutung haben, sondern auch solche Funktionen, die die Parametrierung des Gerätes, also beispielsweise Impulswertigkeit, Impulsbreite, Durchflußeinheit, Soll-Schallgeschwindigkeit usw. betreffen, die normalerweise im Herstellerwerk vor der Auslieferung an den Endverbraucher eingestellt werden müssen. Für den Endverbraucher sind diese Werte häufig ohne Bedeutung und es besteht sogar die Gefahr, daß diese Funktionsdaten von einer nicht berechtigten Bedienungsperson versehentlich oder absichtlich verstellt werden. Außerdem ist es für die Bedienung hinderlich und verwirrend, wenn beim Aufsuchen einer gewünschten Funktion eine Vielzahl von nicht interessierenden Funktionen durchgetastet werden muß, die für den spezifischen Bedienungszweck ohne Bedeutung sind.

Ein Meßgerät der eingangs genannten Art ist in der Druckschrift "Electronic Measurement For Custody Transfer", Oil & Gas Journal, Nov. 12, 1984, Technology, veröffentlicht. Der hier beschriebene Gaszähler umfaßt als wesentliche Hardware-Komponenten einen Mikrocomputer, einen Gaschromatographen, eine Energieversorgungseinheit, Ein- und Ausgänge, einen Drucker und eine Bedienungseinheit. Der in der Software enthaltene Speicher umfaßt UVPROMs und RAMs. Änderungen des Meßsystems sind dadurch möglich, daß UVPROMs ausgetauscht werden, d.h. zur Anpassung an bestimmte Systemanforderungen sind spezielle Bausteine erforderlich.

Der Erfindung liegt die Aufgabe zugrunde, ein Meßgerät der oben genannten Art zu schaffen, das durch Verzicht spezieller, an das Meßgerät angepaßter Datenbausteine Einsparungen bei den Herstellungskosten mit sich bringt.

Durch eine flexible funktionale Anpassung an die Gerätefunktionen eines bestimmten Gerätes der Gerätegattung sowie an die jeweils gewünschte Bedienungsstrategie soll eine einfache und übersichtliche Handhabung gewährleistet sein.

Diese Aufgabe wird durch die im Patentanspruch 1 angegebene Erfindung gelöst. Dadurch ist erreicht, daß einer ganzen Gerätegattung ein einziger Langzeitspeicher zugeordnet werden kann, der sämtliche möglichen Funktionen in Form einer Maximalliste enthält, die sich automatisch an die jeweilige spezifische Geräteausstattung anpaßt, so daß die Maximalliste in eine Geräteliste transformiert wird, die ihrerseits durch eine Unterteilung in Funktionsgruppen funktional systematisierbar ist, so daß codierbare, bedienungsspezifisch verantwortungsorientierte Zugriffsebenen entstehen.

Gemäß einer Weiterbildung nach Patentanspruch 2 besteht für jeden Benutzer die Möglichkeit, aus der Geräteliste eine kundenspezifische Liste zusammenzustellen, die es ihm ermöglicht, eine kurze, übersichtliche und auf die jeweilige Anwendung bezogene Bedienungsroutine zu erstellen.

Durch die weitere Ausbildung nach Patentanspruch 3 ist ein zusätzlicher Bedienungskomfort dadurch erreicht, daß nicht nur Klartext in der jeweils gewünschten Sprache, sondern auch unterschiedliche Maß- und Gewichtssysteme ohne zeitraubende Umrechnungen angezeigt werden können.

Anhand eines Ausführungsbeispieles wird die Erfindung im folgenden näher erläutert.

Das erfindungsgemäße Meßgerät besteht aus einem Bedienungsteil 1, einer Anzeigeeinheit 2, einem Mikrocomputer 3 mit einem Langzeitspeicher 4, einer Meß- und Steuerelektronik 5 mit Meßwerteingängen 6, Funktionssensoren 7, Meßsensoren 8 und Aktoren 9 sowie einem Netzteil 10. Der Bedienungsteil besitzt Funktionstasten 11, Datentasten 12, eine Bestätigungstaste 13, Programmtasten 14, 15 und eine Eichtaste 16.

Ein Meßgerät dieser Art für die Messung von Durchflußmengen von Flüssigkeiten oder Gasen (Medien) soll dazu geeignet sein, aus relativ wenigen Daten, die beispielsweise von einer im Strom des Mediums angeordneten Ultraschall-Meßstrecke ermittelt und an einen der Meßwerteingänge 6 gelegt werden, eine Vielzahl von Meßdaten zu liefern, beispielsweise die Durchflußmenge pro Zeiteinheit in ml/s; das Tagesvolumen in 1, die Fließgeschwindigkeit des Mediums in m/s und die gemessene Schallgeschwindigkeit des Mediums in m/s etwa zur Bestimmung der Art der Flüssigkeit. Außerdem soll das Meßgerät auch Schaltvorgänge ausführen können, beispielsweise dann, wenn ein bestimmtes Volumen vorgegeben ist, nach dessen Durchfluß der Flüssigkeitsdurchlauf unterbrochen werden soll.

Um diese Funktionen ausüben zu können, muß das Meßgerät eichbar und parametrierbar sein. So muß beispielsweise die Impuls wertigkeit in l/Imp festgelegt werden, je nachdem, ob es sich um die Messung von großen oder kleinen Durchflußmengen handeln soll. Auch die Einheit der Durchflußmessung in l/h oder m³/h sowie die Zähleinheit in hl oder m³ müssen ebenso festgelegt und geeicht werden, wie die Meßbereichsendwerte, die sogenannte Schleichmengenunterdrückung, die Dämpfung sowie die Soll-Schallgeschwindigkeit. Darüber hinaus müssen die Zeitpunkte des Rücksetzens des Zählers, bezogen auf Tagesvolumen und Gesamtvolumen bei Vorwärts- und Rückwärtszählung, und die Art der Ansteuerungsimpulse (low, high) bestimmt werden. Ferner müssen Service-Funktionen, beispielsweise der Alarmausgang, das Fließrichtungssignal sowie die Impulsausgänge für die Steuerung der Aktivfunktionen geprüft werden können.

Für alle diese Funktionen muß es getrennte Zugangsberechtigungen geben, damit nicht im Zuge einer normalen Routinebedienung gemessene Funktionsdaten durch unbeabsichtigtes oder vorsätzliches Rücksetzen vor der Registrierung gelöscht werden. Auch muß verhindert werden, daß in die Eichung des Gerätes eingegriffen werden kann. Diese Betriebsdaten dürften nur für bestimmte Personenkreise mit gesonderten Zugriffsberechtigungen zugänglich sein. Das gleiche gilt für die Service- und Prüfdaten.

Es könnten nun herstellerseitig für jedes Meßgerät spezielle Datenbausteine vorgesehen werden, die nur diejenigen Daten oder Datengruppen enthalten, die für ein bestimmtes Meßgerät und, unterteilt in Zugriffsebenen, über bestimmte plombierte Tasten zugänglich sind. Dies wäre sowohl für den Hersteller wie für den Anwender ein umständliches und zeitraubendes Verfahren.

Gemäß der erfinderischen Erkenntnis ist es möglich, mit einem einzigen Langzeitspeicher für eine ganze Gerätegattung auszukommen, der die Gesamtheit aller mit je einer internen Kennziffer versehener Funktionsdaten in Form einer Maximalliste enthält. Dies bringt erhebliche Erleichterungen schon bei der Herstellung des Meßgerätes mit sich, denn diese Maximalliste kann auch beispielsweise alle Funktionen enthalten, die für die Grundeinstellung des Meßgerätes erforderlich sind.

Im Rahmen dieser Maximalliste können die Funktionen funktionsgruppenweise in der Form unterteilt werden, daß die Meßwerte, die Zustände, die Parametrierung des Durchflußgebers, die Rücksetzfunktionen der Zählerstände, der Service und der Abgleich je eine Funktionsgruppe bilden.

Um nur diejenigen Funktionen anzuzeigen, für die das betreffende Meßgerät vorgesehen ist, besitzt die Meß- und Steuerelektronik 5 sogenannte Funktionssensoren 7, die mit den Funktionselementen des Meßgerätes korrespondieren. Dadurch werden alle Funktionen der Maximalliste eliminiert, die für das betreffende Meßgerät keine Bedeutung haben. Auf diese Weise wird die Maximalliste in eine sogenannte Geräteliste umgewandelt. Diese enthält nur noch die Daten der Funktionselemente des betreffenden Gerätes.

Eine anwenderfreundliche Bedienungsvereinfachung ist dadurch möglich, daß der Benutzer in die Lage versetzt wird, die Funktionen nach eigenen Bedürfnissen aus der Geräteliste auszuwählen und in besonderen Anwenderlisten zyklisch abrufbar zu speichern. Auf diese Weise ist es möglich, nur diejenigen Funktionsdaten, die für eine spezielle Anwendung relevant sind, in eine Abfrageschleife einzubeziehen, ohne die restlichen Daten zu eliminieren. Dadurch besteht die Möglichkeit, Kundenlisten zu bilden, die auf bestimmte geänderte Anwendungsbedingungen anpaßbar sind.

Die Meß- und Steuerelektronik 5 ist ferner für den Anschluß von Aktoren 9 vorgesehen, die in der Lage sind, Ventile, Schalter, Alarmeinrichtungen oder dergleichen zu betätigen, um beispielsweise nach dem Durchlauf eines bestimmten Flüssigkeitsvolumens eine Durchflußsperre zu betätigen oder im Falle von Leckagen oder Fehlbedienungen Alarm auszulösen.

Die Anwendungsflexibilität des Meßgerätes läßt sich noch dadurch erhöhen, daß die auf der Anzeigeeinheit 2 angezeigten Klartext- und Dimensionierungsangaben in verschiedenen Sprachen erscheinen. Diese bilden eine eigene Gruppe, die einer der Zugriffsebenen zugeordnet werden kann.

Durch die Erfindung ist erreicht, daß den unterschiedlichsten Arten von Durchflußmeßgeräten nur noch ein einziger Langzeitspeicher zugeordnet werden muß, dessen insgesamt vorhandene Daten automatisch an die Gerätespezifikation angepaßt werden und, durch Zuordnung zu bestimmten Bedienungselementen, anwenderspezifisch flexibilisierbar, d.h. auf den geringstmöglichen Bedienungsaufwand reduzierbar sind. Dies hat den Vorteil, daß der Gerätehersteller nicht gezwungen ist, entweder jedes einzelne Meßgerät anwenderspezifisch auszuführen oder dem Anwender die Programmierung zu überlassen. Er kann das Gerät mit dem maximal möglichen Funktionsumfang der Ein- und Ausgaberoutinen ausliefern, ohne daß dies vor Ort zu einer verwirrenden Informationsflut führt, weil immer die kompletten Ein- und Ausgaberoutinen zyklisch durchlaufen werden müssen, auch dann, wenn z.B. von einer Hilfskraft täglich nur ein einziger Zählerstand zu protokollieren ist. Vielmehr ist es möglich, vor Ort die jeweils gewünschten Ein- und Ausgaberoutinen zu bestimmen und diese auch an häufig wechselnde Benutzungsarten eines einzigen Gerätes anzupassen. Dies gilt für die Ordnung der Reihenfolge der jeweiligen Ein- und Ausgaberoutinen, für die Unterdrückung zur Zeit nicht benutzter Funktionen, für die Vergabe von unterschiedlichen Zugriffsberechtigungen wie auch für erweiterte oder eingeschränkte Ein- und Ausgaberoutinen bei nachträglicher Umrüstung oder Aufrüstung eines Grundgerätes z.B. mit einer höherwertigen Option.

Diese Auswahl und Umstellung der Funktion ist allein mit Hilfe des Tastenfeldes der Bedienungseinheit 1 möglich. So können mittels der Funktionstasten 11 die einzelnen Funktionen in zyklischer Reihenfolge angewählt werden, so daß die entsprechenden Funktionen auf der Anzeigeeinheit 2 erscheinen. Mit Hilfe der Datentasten 12 können bestehende Daten im Sinne einer anderen Parametrierung oder Eichung von dazu berechtigten Personen geändert werden. Mit der Bestätigungstaste 13 können diese geänderten Daten eingespeichert werden. Durch Betätigung der Taste 15 kann ein Prüfprogramm, mit der Taste 16 ein Eichprogramm abgerufen werden. Diese Programme lassen sich mit Hilfe der Funktionstasten 11 zusammenstellen. Mit der Taste 14 ist das ursprüngliche Geräteprogramm reaktivierbar.

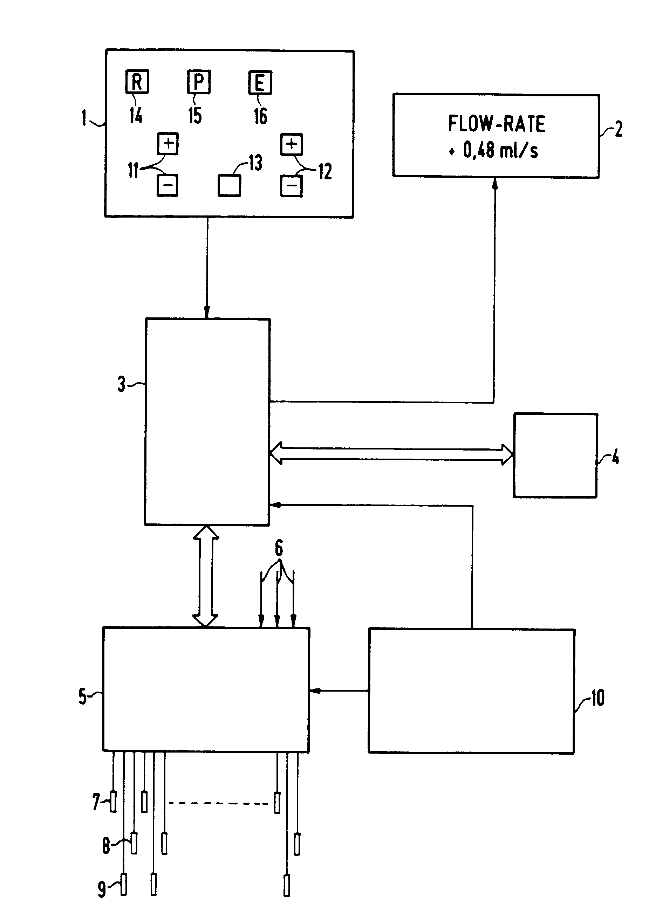

## Patentansprüche

1. Meßgerät zum Ermitteln, Verarbeiten und Anzeigen von Daten über Durchflußmengen von Flüssigkeiten, Gasen oder elektrischen Strömen, mit:
- einer Meß- und Steuerelektronik (5), an der Meßsensoren (8) und Aktoren(9) angeschlossen sind,
- einem Mikrocomputer (3) zur Verarbeitung von in der Meßund Steuerelektronik ermittelten Daten mit einem Langzeitspeicher (4),
- einer Bedienungseinheit (1) mit Bedienungs- und Funktionstasten (11),
- einer Anzeigeeinheit (2) zum Anzeigen von gewählten Funktionsdaten und ermittelten Meßwerten,
**dadurch gekennzeichnet,** daß
- die Meß- und Steuerelektronik (5) Funktionssensoren (7) besitzt, die mit Funktionselemencen korrespondieren und die nur diejenigen Funktionen anzeigen, die für das Meßgerät vorgesehen sind,
- der Langzeitspeicher den kompletten Datensatz aller Funktionselemente einer Meßgerätegattung und der diesen zugeordneten Funktionsdaten für die Messung und Anzeige von Meßwerten und Zuständen sowie die Wahl von Betriebsdaten in Form einer Maximalliste enthält, wobei alle Daten der Maximalliste funktionsgruppenweise geordnet und mit je einer über die Funktionstasten (11) anwählbaren Kennziffer versehen sind,
- jedes Funktionselement einen vom Mikrocomputer (3) identifizierbaren individuellen, der Kennziffer zugeordneten Betriebscode, besitzt,
- der Mikrocomputer so ausgebildet ist, daß er unter Zuhilfenahme der Funktionssensoren (7) alle Funktionselemente zyklisch abfragt und deren Betriebscode mit den Kennziffern der Maximalliste vergleicht und diese bei Übereinstimmung von Betriebscode und Kennziffer zu einer Geräteliste aktiviert, deren Daten durch die Funktionstasten (11) abrufbar sind und auf der Anzeigeeinheit (2) erscheinen.

2. Meßgerät nach Anspruch 1, **dadurch gekenn zeichnet,** daß die Daten der Geräteliste in einer vorgebbaren Reihenfolge über die Funktionstasten (11) der Bedienungseinheit (1) zusammenstellbar sind.

3. Meßgerät nach Anspruch 1 oder 2, **dadurch gekenn zeichnet,** daß die Funktionsdaten und die Meßdaten in mehreren Sprachen darstellbar sind und die gewünschte Sprache nach Wahl der entsprechenden Kennziffer durch die Funktionstasten (11) mit Datentasten (12) wählbar ist.

## Claims

1. Measuring device for determining, processing and displaying data concerning flow rates of liquids, gases or electrical currents, having:
- measuring and control electronics (5) to which measuring sensors (8) and actuators (9) are connected,
- a microcomputer (3) for processing data determined in the measuring and control electronics, with a long-time memory (4),
- an operating unit (1) with operating and functions keys (11),
- a display unit (2) for displaying selected function data and determined measured values,
characterized in that
- the measuring and control electronics (5) have function sensors (7) which correspond with function elements and which only display those functions which are provided for the measuring device,
- the long-time memory includes the complete data record of all function elements of a measuring device type and the function data allocated thereto for the measurement and display of measured values and states as well as the selection of operating data in the form of a maximum list, with all the data of the maximum list being ordered into function groups and being provided with a respective characteristic numeral which can be selected by way of the function keys (11),
- each function element has an individual operating code which can be identified by the microcomputer (3) and is allocated to the characteristic numeral,
- the microcomputer is constructed in such a way that with the aid of the function sensors (7) it cyclically scans all function elements and compares their operating code with the characteristic numerals of the maximum list and activates this, if the operating code and the characteristic numeral correspond, to form a device list, the data of which can be retrieved by the function keys (11) and appears on the display unit (2).

2. Measuring device according to claim 1, characterized in that the data of the device list can be assembled in a specifiable sequence by way of the function keys (11) of the operating unit (1).

3. Measuring device according to claim 1 or 2, characterized in that the function data and the measuring data can be shown in several languages and the desired language can be selected by data keys (12) after the selection of the corresponding characteristic numeral by the function keys (11).

## Revendications

1. Appareil de mesure pour déterminer, traiter et afficher des données concernant des débits de passage de liquides, de gaz ou de courants électriques, comportant:
- une électronique (5) de mesure et de commande à laquelle sont raccordés des capteurs (8) de mesure et des actuateurs (9),
- un micro-ordinateur (3) destiné au traitement de données obtenues dans l'électronique de mesure et de commande et comportant une mémoire (4) de longue durée,
- une unité (1) de commande comportant des touches (11) de commande et de fonctionnement,
- une unité (2) d'affichage pour afficher des données fonctionnelles choisies et des valeurs de mesure déterminées,
caractérisé en ce que
- l'électronique (5) de mesure et de commande a des capteurs (7) fonctionnels qui correspondent à des éléments fonctionnels et qui n'affichent que les fonctions qui sont prévues pour l'appareil de mesure,
- la mémoire de longue durée contient sous la forme d'une liste maximum l'ensemble complet de données de tous les éléments fonctionnels d'un genre d'appareil de mesure et les données fonctionnelles qui y sont associées pour la mesure et l'affichage de valeurs de mesure et d'états ainsi que pour le choix de données de fonctionnement, toutes les données de la liste maximum étant classées par groupes fonctionnels et étant munies chacune d'un chiffre caractéristique pouvant être sélectionné par l'intermédiaire des touches (11) fonctionnelles,
- chaque élément fonctionnel a un code de service individuel, associé au chiffre caractéristique, pouvant être identifié par le micro-ordinateur (3),
- le micro-ordinateur est réalisé de manière à interroger cycliquement tous les éléments fonctionnels à l'aide des capteurs (7) de fonctionnement et à comparer leur code de service aux chiffres caractéristiques de la liste maximum et à activer, en cas de coïncidence du code de service et du chiffre caractéristique, cette liste maximum pour en faire une liste d'appareils dont les données peuvent être appelées par les touches (11) de fonctionnement et apparaissent sur l'unité (2) d'affichage.

2. Appareil de mesure suivant la revendication 1, caractérisé en ce que les données de la liste d'appareil peuvent être, par l'intermédiaire des touches (11) de fonctionnement de l'unité (1) d'interface homme-machine, réunies en une succession prescrite.

3. Appareil de mesure suivant la revendication 1 ou 2, caractérisé en ce que les données fonctionnelles et les données de mesure peuvent être présentées en plusieurs langues et en ce que la langue souhaitée peut être choisie par des touches (12) de données après sélection du chiffre caractéristique correspondant par les touches (11) de fonctionnement.
